# EUROPEAN PATENT SPECIFICATION

(11) **EP 3 407 153 B1**
(45) Date of publication and mention of the grant of the patent: **05.07.2023**
(21) Application number: 18169221.1
(22) Date of filing: 25.04.2018
(51) Int. Cl.: G05D 16/20

(54) **CONTROL OF PRESSURE CONTROLLER AT BORDER VALUES**
STEUERUNG EINES DRUCKREGLERS AN GRENZWERTEN
COMMANDE DE RÉGULATEUR DE PRESSION AU NIVEAU DES VALEURS DE BORDURE

(30) Priority: 23.05.2017 DK PA201700311
(43) Date of publication of application: 28.11.2018
(73) Proprietor: Danfoss A/S, 6430 Nordborg (DK)
(72) Inventor: VIDIC, Tomaz, 6430 Nordborg (DK); KOJIC, Sasa, 6430 Nordborg (DK); KRANCAN, Samo, 6430 Nordborg (DK); PODRZAJ, Gregor, 6430 Nordborg (DK); TERZIC, Sandro, 6430 Nordborg (DK)
(74) Representative: Stevens, Brian

(56) References cited:
- EP-A1- 3 093 729
- US-A1- 2010 236 643

## Description

The present invention relate to a method of affecting the operation of a control valve by changing a system parameter in a fluid flow system when the control valve operates under a condition that would influence the overall operation of the fluid flow system. This is done by introducing a balancing system adapted to balance the system parameter to an adjustable setpoint and where the balancing system comprises a setting actuator capable of adjusting the setting of the setpoint in response to an operating value of the control valve. In the main but not limiting embodiment of the present invention the fluid flow system is a heating systems connected to a district heating supply where the fluid flow is controlled by the control valve, and where a balancing system being a differential pressure controller comprising a differential pressure valve actuator affecting a balancing valve and where the setpoint is the set differential pressure that can be affected by the setting actuator optionally remotely controlled.

### BACKGROUND

It is well known that in heating systems such as for district heating where a remotely supplied heating fluid heats domestic water and water to be fed to heating devices like floor heating systems and radiators, one of the preconditions for a well-functioning (oscillation and noise free) control is the use of a differential pressure controller for the control of the differential pressure across the system, such as the heating system

If the differential pressure is not chosen correctly the risk is malfunctions such as pressure oscillation and noise in the system. Differential pressure controllers are used to maintain differential pressure in a system regardless of the variation of differential pressure in the supply net and consumption in the system.

Differential pressure controllers also are used to create a hydraulic balance in a network.

Use of differential pressure controllers in substations and in the district heating network will maintain a hydraulic balance in the network which ensures a good distribution of water in the supply network and that the desired pressure level in the network can be achieved leading to an adequate heat supply in the network. The correct balancing ensures that the quantity of circulating water in the network can be limited giving reduced costs for water circulation. Due to balancing of the network the pressure drop on e.g. a substation or control valve is always the designed one and no excess energy is needed for pressure pumps

One prior publication, EP 3 093 729, discloses a method of controlling a flow network comprising a pressure controlling means adapted to regulate a pressure difference of a fluid over two locations in the flow network according to a pressure setting by a controller adapted to adjust the pressure setting and to track a physical value in the system, the method being for the controller to operate at a normal load control mode where the pressure controlling means is set at a basic pressure setting when the physical value is within a first threshold range, and at an unstable load control mode including a change of the pressure setting to an unstable load pressure setting when it a gets outside said first threshold range.

Another prior publication, US20100236643, discloses a flow control device comprising an inlet, an outlet in fluid communication with the inlet, a pressure loss element between the inlet and outlet in fluid communication with the inlet and outlet, a pressure sensor located upstream from the pressure loss element configured to measure a first pressure of a fluid flowing through the flow control device, a pressure sensor located downstream from the pressure loss element configured to measure a second pressure of the fluid flowing through the flow control device, and a controller coupled to the first pressure sensor and the second pressure sensor to generate a valve drive signal. The controller can generate a valve control signal based on a differential between the first pressure and the second pressure during a first mode of operation. The controller can also generate a valve control signal based on a measured pressure at a particular pressure sensor during a second mode of operation. The mode of operation can automatically switch based on a predefined parameter (e.g., a preset differential a preset pressure at one of the sensor a fluctuation in the readings of a particular sensor or other parameter).

Most problems arise when the control valve is almost closed leaving only a small through-flow where the control becomes difficult and may lead to oscillations.

### SUMMARY OF THE INVENTION

The object of the present invention foremost is to enhance control performance of the system even at flow rates where the control valve connected to the flow system operates under conditions affecting the overall operation of the flow system, such as when the valve is almost closed.

The object is solved by the technology as given in the claims, especially claim 1 and 6.

This includes in an embodiment a method of controlling a flow network possibly forming part of a larger flow system, such as being connected to a heating supply like a district heating system, and comprising pressure controlling means adapted to regulate a pressure difference of a fluid over two locations in the flow network according to a pressure setting, a controller adapted to adjust the pressure setting and to track a physical value in the system, the method being for the controller to operate
- at a normal load control mode where the pressure controlling means is set at a basic pressure setting when the physical value is within a first threshold, and
- at an unstable load control mode including a change of the pressure setting to an unstable load pressure setting when it a gets outside said first threshold.

By within a first threshold could mean the first threshold composes an upper and lower value, and when the physical parameter is between these two. then it operates at normal load control mode, but changes to unstable load control mode when outside either of the values. In an alternative embodiment It defines either a single lower or upper value, where the first threshold is a lower threshold where the controller changes to unstable load control mode when the physical value gets respectively below or above said first threshold.

This enables the system of operate at a general basic pressure setting during a defined normal load where parts such like a connected flow control valve are adapted to operate most efficient. However, If the load gets at a level where the parts, such as the flow control valve, operates at the limits or even out of the limits where it is designed to operate most efficiently, such as a unstable load where the valve opening of the control valve are almost closed, it changes to a unstable load pressure setting. When system in this manner operates at unstable load, the risk is oscillations occur in a physical value, such as the flow rate as defined by the flow control valve. The unstable load pressure setting in an embodiment may be selected at a value that prevents or reduces oscillations occurring in the physical value at unstable load, such as low flow rate, or in general at a low load, as defined by a small valve opening. It could however alternatively be at a high load.

The unstable load pressure setting may be selected according may be one predefined value, it may be measure and/or calculated according to test or by other means to find one or more values where oscillations are prevented, or at least significantly reduced, or may be estimated as part of the change to the unstable load control mode by some algorithm.

In an embodiment the controller changes from the unstable load control mode to the normal load when the physical value gets within a second threshold. where 'within' could take the same meanina as for the first threshold. defining a range between an upper and lower limit, or being a single value, such as the second threshold being a lower or upper threshold where the controller changes to unstable load control mode when the physical value gets above or below said second threshold.

The unstable load control mode includes a orocedure of tracking oscillations of the physical value and when oscillations are observed then to change from the basic pressure setting to the pressure setting to the unstable load pressure setting.

Alternatively, the pressure setting is changed from the basic pressure setting to the unstable load pressure setting at the time when changing to the unstable load control mode.

In an embodiment the physical value is any one or a combination of any of a position, or opening, of flow control valve and/or position of control valve actuator and/or a temperature in the system and/or a flow in the system and/or a pressure and/or energy flow (power) in the system and/or control signals communicated through a data exchange connection.

In an embodiment the flow network further incluides a flow control valve defining a flow rate in said flow network by an adjustable valve opening, and where said opening defines said physical value.

The present invention further relate to a controller of a pressure controlling means adapted to regulate a pressure difference of a fluid over two locations in a flow network according to a pressure setting, where said controller is adapted to adjust the pressure setting and to track a physical value in the system, and where the controller further is adapted to operate at a normal load control mode where the pressure controlling means is set at a basic pressure setting when the physical value is above a first threshold, and at a unstable load control mode including a change of the pressure setting to a unstable load pressure setting when it a gets below said first threshold.

In an embodiment said flow network further includes a flow control valve defining a flow rate in said flow network by an adjustable valve opening, and where said opening defines said physical value.

### FIGURES

- Fig. 1: An example flow heating system.
- Fig. 2: Graphs illustrating the changes of operation modes according to a first embodiment.
- Fig. 3: Graphs illustrating the changes of operation modes according to a second embodiment.

### DETAILED DESCRIPTION OF THE INVENTION

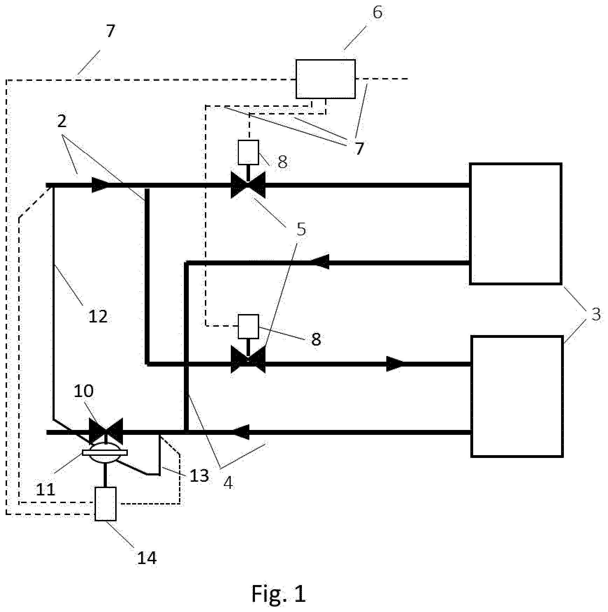

Fig. 1 illustrate a system comprising a fluid communication network (1), or circuit, such as they appear in heating systems like those for domestic heating. They may be connected to e.g. a district heating network or other heat supply means like solar cells etc. The illustrated example network (1) disclose fluid communications having inlet lines (2) feeding heating fluid to heat exchanging devices (3) such as radiators, floor heating HVAC systems etc. The heating fluids subsequently are returned through return lines (4). Flow control valves (5), sensors, controllers and other means may be connected to the system for the control and regulation. The control valves (5) in the illustrated example may be regulated to deliver a flow of fluid meeting heating demand and are operated by a controller (6) defining a flow rate by inducing a setting of a valve opening one or more of the valves (5). The controller (6) may be in data exchange connection (7) with any kinds of sensors connected to the externals or the network (1), and to actuators (8) connected to the valves (5) to adjust the valve openings. Alternatively, or additionally, the controller (6) may be integrated into one or more of the actuators (8).

Further pressure controlling means (10) is connected to the network (1) to equalize the pressure to a given setting. This could be done in a variety of different ways, but often includes a balancing valve (10) connected to actuating means (11) having a membrane connected to a valve element in a manner where a deflection of the membrane influences a flow rate. The opposing sides of the membrane then is in pressure communication connection (12, 13) to two different flow positions of the network (1). The difference in the pressures at these two locations then deflects the membrane to change the flow rate and thereby the pressure difference too.

In the present system any kind of pressure controlling means (10) could be used, the key aspect is that it comprises means (14) to adjust the given pressure setting. One such example valve (10) is to be found in e.g. European Patent publication 3093729.

Flow control valves (5) have given flow ranges where they operate most efficiently, whereas, such as e.g. a low flow rates where the valve opening is small it is known problems may arise with the flow regulation. This could for example lead to oscillations in the flow regulation.

The basic of the present system is that the controller (6) can change between two modes of operating the pressure controlling means (10), one at a normal load control mode operation and the second at a unstable load control mode of operation.

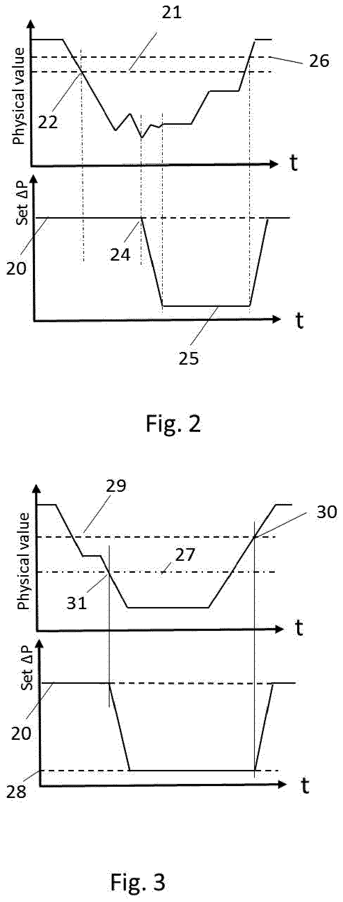

Fig. 2 illustrate a first embodiment method of regulating the pressure controlling means (10) to ensure better performance of a flow control valve (5).

The lower of the two graphs show the given basic pressure setting (20) over time, and the upper graph some system parameter over time such as the flow rate in a flow control valve (5), the temperature in the flows or other parameters related to the control. In normal load control mode the controller (6) sets the pressure setting of the pressure controlling means (10) at the basic pressure setting (20).

The controller (6) tracks some physical value in the system such values of position, or opening, of a flow control valve (5) and/or position of a control valve actuator (8) and/or a temperature in system and/or a flow in the system and/or a pressure and/or an energy flow (power) in the system and/or control signals in the system such as communicated to or from the controller (6) by data exchange connection (7). If the physical value gets below a defined first threshold (21) the controller (6) goes to a the unstable load control mode of operating first including the step of starting a procedure of tracking possible oscillations (22) of physical value. When oscillations are observed (24) it initiates an adjustment of the pressure setting of the pressure balancing means (10) to a unstable load pressure setting value (25), such as one that prevents, or at least significantly reduces oscillations (2). This value (25) could be one set predefined value, but could also be one calculated by an algorithm in dependence on a variety of different parameters like the temperatures in the network (1), ambient conditions etc. When the physical value increases above a second threshold (26) (optionally being the same as the first threshold (21) the setting of differential pressure controller is set back to nominal value pressure setting (20). The pressure setting (20) and/or first (21) and/or second threshold values (26) can be set manually or dynamically/automatically by means of schedules or predictions or input from a network or a system operator.

Fig. 3 illustrate similar graphs to those of fig. 2, but with an alternative regulation method. Again the method includes a normal load operation mode where the pressure setting are set at the basic pressure setting (20) of pressure controlling means (10), stabilisation of oscillation by operation of differential pressure controller (10) by changing (31) to unstable load control mode of operation, and returning setting of pressure controlling means (10) to the normal load of operating by changing to basic pressure setting (20) when it gets above a second threshold (29).

The controller (6) tracks physical unit values of position, or opening, of flow control valve (5) and/or position of control valve actuator (8) and/or a temperature in the system and/or a flow in the system and/or a pressure and/or energy flow (power) in the system and/or control signals communicated through a data exchange connection (7). If the physical unit values is below a defined first threshold (27) the controller (6) initiates adjustment of setting of pressure controlling means (10) to a unstable load pressure setting (28), such as one that prevents, or at least significantly reduces oscillations (2). When the physical unit value increases above an second threshold (29) the setting (30) of differential pressure controlling means (10) is set back to basic pressure setting (20).

In the same manner as for the first embodiment of fig. 2, the basic pressure setting (20), the unstable load pressure setting (28), first (27) and/ or second threshold (29) can be pre-set, set manually or dynamically by means of schedules or predictions or input from a network or a system, being calculated by an algorithm or being looked up in a table.

The second threshold (26, 29) according to both embodiments may be equal or different than that of the first threshold (21, 27). If a single value it may be higher or alternatively lower.

## Claims

1. A method of controlling a flow network (1) of a heating system comprising pressure controlling means (10) adapted to regulate a pressure difference of a fluid over two locations in the flow network (1) according to a differential pressure setting of a differential pressure valve actuator,
a controller (6) adapted to adjust the differential pressure setting and to track a physical value in the system, the method being for the controller (6) to operate
- at a normal load control mode where the pressure controlling means is set at a basic differential pressure setting (20), and
- at an unstable load control mode wherein, if the controller operates in the normal load control mode and the physical value is gets below a first threshold (21, 27), then the controller changes to the unstable load control mode, and wherein
the controller (6) changes from the unstable load control mode to the normal load control mode when the physical value gets above a second threshold (26, 29), **characterized in that** the unstable load control mode first includes a step of starting a procedure of tracking possible oscillations (22) of said physical value, and of changing from the basic differential pressure setting (20) to an unstable load differential pressure setting (25) when oscillations are observed.

2. A method according to claim 1, wherein the physical value is any one or a combination of any of a position, or opening, of a flow control valve (5) and/or position of a control valve actuator (8) and/or a temperature in the system and/or a flow in the system and/or a pressure and/or energy flow (power) in the system and/or control signals communicated through a data exchange connection (7).

3. A method according any of the previous claims, where the unstable load differential pressure setting (20) is a value that prevents or reduces oscillations (25, 28) occurring in the physical value at unstable load.

4. A method according to any of the previous claims, where the flow network (1) further includes a flow control valve (5) defining a flow rate in said flow network (1) by an adjustable valve opening, and where said opening defines said physical value.

5. A controller (6) of a pressure controlling means (10) adapted to regulate a pressure difference of a fluid over two locations in a flow network (1) according to a differential pressure setting, wherein said controller is adapted to perform a method according to any of the claims 1-4.

6. A controller (6) according to claim 5, wherein said flow network (1) further includes a flow control valve (5) defining a flow rate in said flow network (1) by an adjustable valve opening, and where said opening defines said physical value.

## Patentansprüche

1. Verfahren zum Steuern eines Strömungsnetzes (1) eines Heizungssystems, umfassend ein Drucksteuermittel (10), ausgelegt zum Regeln einer Druckdifferenz eines Fluids über zwei Orte in dem Strömungsnetz (1) gemäß einer Differenzdruckeinstellung eines Differenzdruckventilstellglieds,
eine Steuerung (6), ausgelegt zum Anpassen der Differenzdruckeinstellung und zum Verfolgen eines physischen Werts in dem System, wobei das Verfahren dafür ausgelegt ist, dass die Steuerung (6)
- in einem Normallast-Steuermodus arbeitet, in dem das Drucksteuermittel auf eine Basisdifferenzdruckeinstellung (20) eingestellt ist, und
- in einem Instabile-Last-Steuermodus
arbeitet, wobei
die Steuerung dann, wenn die Steuerung in dem Normallast-Steuermodus arbeitet und der physikalische Wert unter eine erste Schwelle (21, 27) fällt, in den Instabile-Last-Steuermodus wechselt, und wobei die Steuerung (6) aus dem Instabile-Last-Steuermodus in den Normallaststeuermodus wechselt, wenn der physikalische Wert über eine zweite Schwelle (26, 29) steigt, **dadurch gekennzeichnet, dass** der Instabile-Last-Steuermodus zunächst einen Schritt zum Starten einer Prozedur zum Verfolgen möglicher Schwingungen (22) des physischen Werts und zum Wechseln von der Basisdifferenzdruckeinstellung (20) zu einer Instabile-Last-Differenzdruckeinstellung (25), wenn Schwingungen beobachtet werden, beinhaltet.

2. Verfahren nach Anspruch 1, wobei der physikalische Wert ein beliebiges oder eine Kombination aus beliebigen einer Stellung oder einer Öffnung eines Durchflussregelventils (5) und/oder einer Stellung eines Regelventilstellglieds (8) und/oder einer Temperatur in dem System und/oder eines Durchflusses in dem System und/oder eines Drucks und/oder eines Energieflusses (Leistung) in dem System und/oder von über eine Datenaustauschverbindung (7) kommunizierten Steuersignalen ist.

3. Verfahren nach einem der vorhergehenden Ansprüche, wobei die Instabile-Last-Differenzdruckeinstellung (20) ein Wert ist, der bei instabiler Last in dem physischen Wert auftretende Schwingungen (25, 28) verhindert oder reduziert.

4. Verfahren nach einem der vorhergehenden Ansprüche, wobei das Strömungsnetz (1) ferner ein Durchflussregelventil (5) beinhaltet, das eine Durchflussrate in dem Strömungsnetz (1) durch eine einstellbare Ventilöffnung definiert, und wobei die Öffnung den physischen Wert definiert.

5. Steuerung (6) eines Drucksteuermittels (10), ausgelegt zum Regeln einer Druckdifferenz eines Fluids über zwei Orte in einem Strömungsnetz (1) gemäß einer Differenzdruckeinstellung, wobei die Steuerung dazu ausgelegt ist, ein Verfahren nach einem der Ansprüche 1-4 durchzuführen.

6. Steuerung (6) nach Anspruch 5, wobei das Strömungsnetz (1) ferner ein Durchflussregelventil (5) beinhaltet, dass eine Durchflussrate in dem Strömungsnetz (1) durch eine einstellbare Ventilöffnung definiert und wobei die Öffnung den physischen Wert definiert.

## Revendications

1. Procédé de commande d'un réseau d'écoulement (1) d'un système de chauffage comprenant
des moyens de commande de pression (10) conçus pour réguler une différence de pression d'un fluide entre deux emplacements du réseau d'écoulement (1) selon un réglage de pression différentielle d'un actionneur de soupape de pression différentielle,
un contrôleur (6) conçu pour ajuster le réglage de pression différentielle et pour surveiller une valeur physique dans le système, le procédé consistant en ce que le contrôleur (6) fonctionne
- à un mode de commande de charge normale dans lequel les moyens de commande de pression sont définis à un réglage de pression différentielle basique (20), et
- à un mode de commande de charge instable, où,
si le contrôleur fonctionne au mode de commande de charge normale et que la valeur physique devient inférieure à un premier seuil (21, 27), alors le contrôleur passe au mode de commande de charge instable, et
le contrôleur (6) passe du mode de commande de charge instable au commande de charge normale lorsque la valeur physique passe au-dessus d'un deuxième seuil (26, 29), **caractérisé en ce que** le mode de commande de charge instable comprend tout d'abord une étape de démarrage d'une procédure de surveillance d'oscillations possibles (22) de ladite valeur physique, et de passage du réglage de pression différentielle de base (20) à un réglage de pression différentielle de charge instable (25) lorsque des oscillations sont observées.

2. Procédé selon la revendication 1, dans lequel la valeur physique est l'une quelconque ou une combinaison de n'importe lesquelles d'une position, ou une ouverture, d'une soupape de régulation de débit (5) et/ou d'une position d'un actionneur de soupape de commande (8) et/ou d'une température dans le système et/ou d'un débit dans le système et/ou d'une pression et/ou d'un flux d'énergie (puissance) dans le système et/ou de signaux de commande communiqués via une connexion d'échange de données (7).

3. Procédé selon l'une quelconque des revendications précédentes, dans lequel le réglage de pression différentielle de charge instable (20) est une valeur qui empêche ou réduit des oscillations (25, 28) survenant dans la valeur physique à une charge instable.

4. Procédé selon l'une quelconque des revendications précédentes, dans lequel le réseau d'écoulement (1) comprend en outre une soupape de régulation de débit (5) définissant un débit dans ledit réseau d'écoulement (1) par ouverture d'une soupape ajustable, et dans lequel ladite ouverture définit ladite valeur physique.

5. Contrôleur (6) d'un moyen de commande de pression (10) conçu pour réguler une différence de pression d'un fluide entre deux emplacements du réseau d'écoulement (1) selon un réglage de pression différentielle, ledit contrôleur étant adapté pour exécuter un procédé selon l'une quelconque des revendications 1 à 4.

6. Contrôleur (6) selon la revendication 5, dans lequel ledit réseau d'écoulement (1) comprend en outre une soupape de régulation de débit (5) définissant un débit dans ledit réseau d'écoulement (1) par ouverture d'une soupape ajustable, et dans lequel ladite ouverture définit ladite valeur physique.
